(19) Europäisches Patentamt
European Patent Office
Office européen des brevets

(11) **EP 3 882 027 A1**

(12) **EUROPEAN PATENT APPLICATION**
published in accordance with Art. 153(4) EPC

(43) Date of publication:
**22.09.2021 Bulletin 2021/38**

(51) Int Cl.:
**B32B 27/36** (2006.01)          **C09D 5/02** (2006.01)
**C09D 167/00** (2006.01)          **B32B 15/09** (2006.01)

(21) Application number: **19885572.8**

(22) Date of filing: **08.11.2019**

(86) International application number:
**PCT/JP2019/044007**

(87) International publication number:
**WO 2020/100775 (22.05.2020 Gazette 2020/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.11.2018   JP 2018213331
13.11.2018   JP 2018213332**

(71) Applicant: **Toyo Seikan Group Holdings, Ltd.
Shinagawa-ku
Tokyo 141-8627 (JP)**

(72) Inventors:
• **KASHIWAKURA, Takuya**
  **Yokohama-shi, Kanagawa 240-0062 (JP)**
• **ZHANG, Nan**
  **Yokohama-shi, Kanagawa 240-0062 (JP)**
• **SAKURAGI, Arata**
  **Yokohama-shi, Kanagawa 240-0062 (JP)**
• **YAMAMOTO, Hiromi**
  **Yokohama-shi, Kanagawa 240-0062 (JP)**

(74) Representative: **J A Kemp LLP
14 South Square
Gray's Inn
London WC1R 5JJ (GB)**

(54) **AQUEOUS COATING MATERIAL COMPOSITION AND COATED METAL BASE BODY**

(57)    The present invention relates to an aqueous coating composition and a coated metal sheet having a coating formed of the aqueous coating composition. The aqueous coating composition includes a base resin of a polyester resin having an acid value of not lower than 10 mgKOH/g and lower than 70 mgKOH/g and a glass transition temperature of not lower than 35°C, and the composition contains β-hydroxyalkylamide compound as a curing agent. The equivalent ratio of the hydroxyl group of the β-hydroxyalkylamide compound to the carboxyl group of the polyester resin (OH group / COOH group molar ratio) is in the range of 0.8 to 3.0. The aqueous coating composition is excellent in flavor sorption resistance and retort whitening resistance and applicable to form a coating excellent in coating properties such as curability and workability.

EP 3 882 027 A1

## Description

Technical Field:

The present invention relates to an aqueous coating composition and a coated metal substrate having a coating formed of the aqueous coating composition. More specifically, the present invention relates to an aqueous coating composition having excellent flavor sorption resistance and retort whitening resistance, and further having excellent coating properties such as curability and workability. The present invention relates also to a coated metal substrate having a coating formed of the coating composition.

Background Art:

A metal container such as a beverage can or a metal lid is provided with a coating of a coating material or a resin coating for the purpose of preventing corrosion of the metal material. The coating or the like is required to have workability, corrosion resistance, adhesion to the metal material, curability, and the like. Further, a coating to be formed on the inner surface is required to have additional properties other than the workability, since the coating on the inner surface may be brought into contact with contents. Specifically, it is necessary to prevent impairment of the taste or flavor of the contents, namely, to prevent elution of the coating component or the like. At the same time, there is a necessity of preventing sorption (adsorption) of the flavor component (aroma component) of the contents (namely, flavor sorption resistance). The coating may be subjected to retort sterilization or the like under high-temperature and high-humidity conditions. Even in such cases, the coating is required to keep favorable adhesion to the metal material. And in particular, when the coating is applied to the outer surface of the metal lid or the like, there is a necessity of preventing the coating from being whitened (retort whitening resistance).

Examples of coating composition to be used widely for conventional metal containers or metal lids include epoxy-based coating materials such as an epoxy phenol-based coating material, an epoxy-amino-based coating material, or an epoxy-acrylic coating material, because these coating materials are excellent in coating properties such as curability and corrosion resistance. However, since many epoxy-based coating materials are produced from bisphenol-A, a coating material free from bisphenol-A is desired.

From this viewpoint, a polyester-based aqueous coating composition free from the bisphenol-A has been proposed as the coating composition for a metal container or a metal lid. This composition is employed, considering also the environmental pollution and influences on the working environments.

Patent Document 1 proposes an example of the polyester-based aqueous coating composition based on an aromatic polyester resin having a carboxyl group. The composition has an acid value (AV) in the range of 10 to 30 mgKOH/g and a number average molecular weight (Mn) in the range of 3,000 to 10,000. This composition is used in combination with a curing agent, a neutralizing agent to the polyester resin, and a cosolvent so as to provide a coating material for metal package, excellent in curability and retort resistance.

Patent Document 2 proposes another aqueous coating composition containing an acrylic modified polyester resin (C) and a β-hydroxyalkylamide crosslinking agent (D) dispersed stably in an aqueous medium. The acrylic modified polyester resin (C) is prepared by graft-polymerizing a polyester resin (A) with a polymerizable unsaturated monomer component (B). Here, the polyester resin (A) has an ethylenic double bond at a resin end and has a number average molecular weight in the range of 2,000 to 50,000, and the polymerizable unsaturated monomer component (B) contains a carboxyl group-containing polymerizable unsaturated monomer.

Prior art documents:

[Patent Documents:

[Patent Document 1] Japanese Patent 4228585
[Patent Document 2] JP-A 2003-26992

Summary of the invention:

Problem to be solved by the invention:

However, when a phenol resin that forms a self-condensate is used as the curing agent as in Patent Document 1, a hard and brittle domain derived from the self-condensate of the phenol resin is formed in the coating, and thus, the coating cannot have sufficient workability. Further, since the thus formed coating may have a yellowish tone peculiar to the phenol resin, the color tone of the coating may cause a problem in some applications.

When an acrylic modified polyester resin having a high acid value is used as in Patent Document 2, sufficient workability cannot be obtained.

Therefore, an object of the present invention is to provide an aqueous coating composition having excellent flavor sorption resistance and retort whitening resistance, and further excellent coating properties such as workability, coating color tone and curability. Another object of the present invention is to provide a coated metal substrate having a coating formed of this aqueous coating composition.

Means for Solving the Problems:

The present invention provides an aqueous coating composition containing a polyester resin as a base resin having an acid value of not less than 10 mgKOH/g and less than 70 mgKOH/g and a glass transition temperature of not lower than 35°C, and a β-hydroxyalkylamide compound as a curing agent. The β-hydroxyalkylamide compound contains a hydroxyl group at an equivalent ratio (OH group / COOH group molar ratio) in a range of 0.8 to 3.0 to a carboxyl group of the polyester resin.

It is suitable in the present invention that:

1. the polyester resin is either an acrylic unmodified polyester resin or an acrylic modified polyester resin containing an acrylic resin component in an amount (modified amount) of less than 10% by mass;
2. the β-hydroxyalkylamide compound is blended as a solid content in a range of 1 to 20 parts by mass relative to 100 parts by mass of a solid content of the polyester resin;
3. 100 to 80 mol% of the entire polyvalent carboxylic acid component constituting the polyester resin is an aromatic dicarboxylic acid, and 0 to 20 mol% is an aliphatic dicarboxylic acid; and
4. the molar rate of the aliphatic dicarboxylic acid having more than 6 carbon atoms is less than 10 mol% in the entire polyvalent carboxylic acid component constituting the polyester resin.

The present invention further provides a coated metal substrate having a coating formed of the aqueous coating composition.

Effect of the Invention:

The present inventors keenly studied and reviewed for improvement of the coating properties of coatings formed of a polyester-based aqueous coating compositions, and the inventors have found that a coating formed by using a polyester resin having a specific acid value and a specific glass transition temperature and a curing agent formed of a β-hydroxyalkylamide compound is excellent in coating properties such as curability, workability and coating color tone. Another finding is that sorption of the flavor component in the content to the coating can be prevented effectively.

The coating composition of the present invention has an excellent flavor sorption resistance and also excellent coating properties such as workability and curability. This is demonstrated from the results of Examples described later. Namely, the coated metal sheet having the coating formed of the aqueous coating composition of the present invention has excellent curability and workability. After this coated metal sheet is stored with a model liquid containing 2 ppm limonene in a tightly-sealed DURAN bottle under conditions of 30°C for 14 days, the coating (2.5 × 5 cm$^2$) has a limonene sorption rate of less than 25% (Examples 1-14). On the other hand, when a polyester resin having a glass transition temperature lower than 40°C is used (Comparative Example 1), the limonene sorption rate is more than 25%, showing that the flavor sorption resistance is inferior. When a polyester resin having an acid value of less than 10 mgKOH/g is used (Comparative Example 2), the curability is inferior. When a polyester resin having an acid value of more than 70 mgKOH/g is used (Comparative Examples 3, 4), satisfactory workability cannot be obtained.

The inventors have found also that the equivalent ratio (OH group / COOH group molar ratio) of the polyester resin to the functional group of the curing agent in the coating composition is important for development of retort whitening resistance, and that the coating composition is excellent also in coating properties such as curability and workability.

Mode for Carrying Out the Invention:

(Polyester resin)

It is important for the aqueous coating composition of the present invention that the polyester resin as the base resin (main component) has an acid value of not less than 10 mgKOH/g and less than 70 mgKOH/g, preferably not less than 12 mgKOH/g and less than 60 mgKOH/g, more preferably not less than 14 mgKOH/g and less than 50 mgKOH/g, and still more preferably in the range of 17 to 45 mgKOH/g.

Namely in the present invention, it is important that the polyester resin as the base resin has an appropriate carboxyl group amount (acid value) so that the polyester resin can be imparted with coating properties such as curability, workability and coating adhesion. When the acid value is smaller than this range, it indicates that the number of the carboxyl groups serving as points for crosslinking with the curing agent is small, and thus, the curability may be inferior. As a result, sufficient curing degree cannot be obtained when the coating-baking time is short for instance, degrading the water resistance of the coating (barrier properties), and it may degrade the corrosion resistance and retort whitening resistance. At the same time, depending on the glass transition temperature of the polyester resin, the coating tends to be brittle over time to degrade the workability. In addition to that, since there are fewer carboxyl groups that contribute to the adhesion between the coating and the metal substrate, the adhesion also may be inferior. When the acid value exceeds the range, the number of the points for crosslinking with the curing agent is increased to improve the curability. However, the density of the crosslinking points may be increased excessively to degrade the workability.

Even when the acid value is higher than the range, it may be possible to decrease the crosslinking point density by adjustment such as reducing the blend amount of the curing agent. In this case, however, free carboxyl groups not to be used for crosslinking may remain in the coating to degrade the water resistance of the coating. As a result, sufficient corrosion resistance and retort whitening resistance cannot be obtained.

In the present invention, a mixed polyester resin obtained by blending two or more kinds of polyester resins each having an acid value within the aforementioned range (not less than 10 mgKOH/g and less than 70 mgKOH/g) may be used. In this case, the sum of the values obtained by multiplying the acid value and the mass fraction of each polyester resin is defined as the average acid value ($AV_{mix}$) of the mixed polyester resin.

In a case of using a blend of a polyester resin having an acid value within the aforementioned range and a polyester resin having an acid value out of the range, preferably the content of the polyester resin having an acid value within the range (mass rate) is not less than 30% by mass, more preferably not less than 40% by mass, and still more preferably not less than 50% by mass, relative to the entire polyester resin amount (total solid mass of the polyester resins contained in the aqueous coating composition). In a case of blending a low acid value polyester resin having an acid value of less than 5 mgKOH/g, the content of the low acid value polyester resin (mass rate) is preferably less than 60% by mass, more preferably less than 50% by mass, and still more preferably less than 40% by mass, relative to the entire polyester resin amount (total solid mass of the polyester resins contained in the aqueous coating composition). Since the low acid value polyester resin has an extremely small number of carboxyl groups serving as points for reaction with the curing agent, the low acid value polyester resin itself is rarely incorporated into the crosslinked structure, and thus, there is a high possibility that the polyester resin may remain uncrosslinked in the coating even after baking. Therefore, when the content of the low acid value polyester resin having an acid value of less than 5 mgKOH/g is 50% by mass or more in the entire resin, sufficient curability may not be obtained, whereby retort whitening resistance and the like may deteriorate.

In the coating composition of the present invention, it is also important that the glass transition temperature (Tg) of the polyester resin to be used is not lower than 35°C, preferably not lower than 40°C, more preferably in the range of 50 to 120°C, and still more preferably in the range of 60 to 100°C. When Tg is lower than this range, the flavor component tends to diffuse in the coating due to the increased motility of the resin, whereby the sorption amount is increased to degrade the flavor sorption resistance. Further, since the barrier properties of the coating is lowered, the retort whitening resistance and the corrosion resistance may deteriorate. When Tg is higher than the range, the formed coating becomes hard to degrade the workability.

In the present invention, two or more kinds of polyester resins different from each other in Tg can be blended to be used. In comparison with a case of using a single kind of polyester resin, a blend of polyester resins different from each other in Tg may form a coating with superior impact resistance, and the coating may have less coating defects even when applied with external impact. As for the glass transition temperature, there is no particular limitation as long as $Tg_{mix}$ of the polyester resin blend calculated by the following Equation (1) is within the above-described range.

$$1/Tg_{mix} = (W1/Tg1) + (W2/Tg2) + ... + (Wm/Tgm) \cdots (1)$$
$$W1 + W2 + ... + Wm = 1$$

In the Equation, $Tg_{mix}$ represents the glass transition temperature (K) of the polyester resin blend, and Tg1, Tg2,..., Tgm represent the glass transition temperatures (K) of the respective polyester resins to be used (polyester resin 1, polyester resin 2,..., polyester resin m). Further, W1, W2,..., Wm represent the mass fractions of the respective polyester resins (polyester resin 1, polyester resin 2,..., polyester resin m).

The polyester resin used for the aqueous coating composition of the present invention is preferably a mixture of a polyester resin (A) having Tg in the range of 35°C to 100°C and a polyester resin (B) having Tg in the range of -30°C to 25°C from the viewpoint of impact resistance of the coating. In this case, it is preferable that the blend ratio is (A):(B) = 98:2 to 10:90, particularly 95:5 to 30:70, in terms of mass ratio.

It is desirable that the polyester resin used in the present invention has the aforementioned acid value and glass transition temperature. Further in the present invention, the polyester resin used as the base resin is desirably an acrylic unmodified polyester resin that is not modified with an acrylic resin.

As for the polyester-based aqueous coating composition, it has been widely proposed to use an acrylic-modified polyester resin. This resin is modified with an acrylic resin by a method such as graft polymerization of a vinyl-based monomer onto a polyester resin. However, a polyester resin modified with an acrylic resin tends to be inferior in workability of a coating to be formed.

Further, the modification may increase the number of steps for production and also increase the production cost. In light of this, the polyester resin to be used in the present invention is preferably a polyester resin that is not modified with an acrylic resin (acrylic unmodified polyester resin). In a case of using the acrylic modified polyester resin, the content (mass ratio) of the acrylic resin component (polymer component in the polymerizable unsaturated monomer) in the entire acrylic modified polyester resin is less than 10% by mass.

Any well-known water-dispersible and/or water-soluble polyester resin to be used for coating compositions can be used in the present invention as long as the polyester resin is an acrylic unmodified resin having the aforementioned acid value and glass transition temperature.

The water-dispersible polyester resin and the water-soluble polyester resin are polyester resins containing hydrophilic groups as their components. These components may be physically adsorbed on the surfaces of the polyester dispersed elements, but particularly preferably, they are copolymerized in the polyester resin skeleton.

Examples of the hydrophilic group include a hydroxyl group, an amino group, a carboxyl group, a sulfonic acid group, or a derivative thereof, a metal salt, and ether. A polyester resin containing these groups in the molecules can be present in a state dispersible in water.

Specific examples of the component containing the hydrophilic group include: carboxylic anhydrides such as phthalic anhydride, succinic anhydride, maleic anhydride, trimeric anhydride, itaconic anhydride, and citraconic anhydride; hydroxyl group-containing polyether monomers such as polyethylene glycol, polypropylene glycol, glycerin, and polyglycerin; and metal salts or ammonium salts of sulfonic acid-containing monomers such as 5-sulfoisophthalic acid, and 4-sulfonaphthalene-2,7-dicarboxylic acid.

An example of the polyester resin suitably used in the present invention is a carboxyl group-containing water-dispersible polyester resin and/or a carboxyl group-containing water-soluble polyester resin, each having a carboxyl group as a hydrophilic group.

There is no particular limitation for the monomer component to form the polyester resin in combination with a monomer containing the hydrophilic group, as long as the monomer is the one usually used in polymerization of a polyester resin. Examples of polyvalent carboxylic acid component to constitute the polyester resin include: aromatic dicarboxylic acids such as terephthalic acid, isophthalic acid, orthophthalic acid and naphthalenedicarboxylic acid; aliphatic dicarboxylic acids such as succinic acid, glutaric acid, adipic acid, azelaic acid, sebacic acid, dodecanedionic acid, and dimer acid; unsaturated dicarboxylic acids such as (anhydrous) maleic acid, fumaric acid, and terpene-maleic acid adducts; alicyclic dicarboxylic acids such as 1,4-cyclohexanedicarboxylic acid, tetrahydrophthalic acid, hexahydroisophthalic acid, and 1,2-cyclohexenedicarboxylic acid; and trivalent or higher valent carboxylic acids such as (anhydrous) trimellitic acid, (anhydrous) pyromellitic acid, and methylcyclohexenetricarboxylic acid. Among them, one or plural kinds of monomers can be selected to be used.

In the present invention, the content of the aromatic dicarboxylic acid such as terephthalic acid, isophthalic acid and naphthalenedicarboxylic acid in the polyvalent carboxylic acid component constituting the polyester resin is preferably not less than 80 mol% and particularly preferably in the range of 80 to 100%, from the viewpoint of flavor sorption resistance, corrosion resistance, retort whitening resistance and the like.

In some cases, the polyvalent carboxylic acid to constitute the polyester resin preferably contains an aliphatic dicarboxylic acid such as adipic acid or sebacic acid in an amount of the residue of the above-mentioned aromatic dicarboxylic acid, that is, not more than 20 mol%, from the viewpoint of workability. However, an aliphatic dicarboxylic acid such as sebacic acid, which has more than 6 carbon atoms, has many hydrophobic hydrocarbon portions. Therefore, the aliphatic carboxylic acid has a high affinity with hydrophobic flavor components such as hydrocarbon-based limonene, and is easily sorbed. As a result, the flavor sorption resistance of the coating may deteriorate when the coating is formed using a polyester resin containing an aliphatic dicarboxylic acid having more than 6 carbon atoms at a higher rate as the polyvalent carboxylic acid component to constitute the polyester resin. Therefore, it is desirable that the content of the aliphatic dicarboxylic acid having more than 6 carbon atoms in the polyvalent carboxylic acid component constituting the polyester resin is less than 10 mol%. In the case where the polyester resin is a mixed polyester resin obtained by blending two or more kinds of polyester resins, it is desirable that the content of the aliphatic dicarboxylic acid having more than 6 carbon atoms in the entire polyvalent carboxylic acid components constituting the mixed polyester resin is less than 10 mol%.

Although there is no particular limitation for the polyvalent alcohol component for constituting the polyester resin of the present invention, the examples include: aliphatic glycols such as ethylene glycol, propylene glycol(1,2-propanediol), 1,3-proanediol, 1,4-butanediol, 1,2-butanediol, 1,3-butanediol, 2-methyl-1,3-propanediol, neopentylglycol, 1,5-pentanediol, 1,6-hexanediol, 3-methyl-1,5-pentanediol, 2-ethyl-2-butyl-1,3-propanediol, 2,4-diethyl-1,5-pentanediol, 1-methyl-1,8-octanediol, 3-methyl-1,6-hexanediol, 4-methyl-1,7-heptanediol, 4-methyl-1,8-octanediol, 4-propyl-1,8-octanediol, and 1,9-nonanediol; ether glycols such as diethylene glycol, triethylene glycol, polyethylene glycol, polypropylene glycol and polytetramethylene glycol; alicyclic polyalcohols such as 1,4-cyclohexanedimethanol, 1,3-cyclohexanedimethanol, 1,2-cyclohexanedimethanol, tricyclodecaneglycols, and water-added bisphenols; and trivalent or higher polyalcohols such as trimethylolpropane, trimethylolethane, and pentaerythritol. Each of the components can be used singly or in combination with at least one of the other components. Among these polyhydric alcohol components, ethylene glycol, propylene glycol, 1,4-butanediol, or 1,4-cyclohexanedimethanol can be suitably used as a component for constituting the polyester resin in the present invention.

The polyester resin can be produced by any known method such as polycondensation of at least one of these polyvalent carboxylic acid components and at least one of the polyhydric alcohol components. Another method is depolymerization with a polyvalent carboxylic acid component such as terephthalic acid, isophthalic acid, trimellitic anhydride, trimellitic acid or pyromellitic acid after the polycondensation, or ring-opening addition of an acid anhydride such as phthalic anhydride, maleic anhydride, trimellitic anhydride or ethylene glycol bistrimellitate dianhydride after the polycondensation.

The number average molecular weight (Mn) of the polyester resin is preferably in the range of 1,000 to 100,000, particularly 3,000 to 50,000, though the present invention is not limited to this range. When the number average molecular weight is smaller than this range, the coating may become brittle and inferior in workability; when it is larger than this range, stability of the coating material may deteriorate.

The average particle size of the polyester resin in an aqueous medium is in the range of 10 to 1,000 nm, and particularly preferably 20 to 500 nm.

The hydroxyl value of the polyester resin is preferably not more than 20 mgKOH/g, more preferably not more than 10 mgKOH/g, though the present invention is not limited thereto. The curing agent formed of the $\beta$-hydroxyalkylamide compound of the present invention reacts with the carboxyl groups in the polyester resin but hardly or never reacts with the hydroxyl groups, and thus, most of the hydroxyl groups in the polyester resin remain unreacted in the coating. As a result, when the hydroxyl group value is larger than the range, more hydroxyl groups may remain, which may degrade the corrosion resistance.

(Curing agent)

An important feature of the present invention is that a $\beta$-hydroxyalkylamide compound having a $\beta$-hydroxyalkylamide group is used as the curing agent (crosslinking agent) to provide the functional group capable of crosslink-reacting with the carboxyl group of the polyester resin as the base resin.

Resol-type phenol resins, amino resins and the like, which are usually used as the curing agents for a polyester-based coating composition, are likely to cause a self-condensation reaction between the curing agents. Therefore, a self-condensate as a hard and brittle domain is formed during formation of a coating, whereby the coating may become hard to degrade the workability. Further, since the reaction points (functional groups) of the curing agent are consumed during the self-condensation reaction, the amount of curing agent necessary for obtaining sufficient curability tends to be increased to cause inefficiency. Furthermore, the large amount of curing agent contained in the coating may adversely affect the coating properties such as workability and impact resistance. In contrast, the $\beta$-hydroxyalkylamide compound used in the present invention is a curing agent that hardly or never undergoes a self-condensation reaction, and thus, formation of a hard and brittle self-condensate can be prevented or controlled. In addition, since the blend amount of the $\beta$-hydroxyalkylamide compound relative to the carboxyl group amount of the polyester resin can be minimized efficiently. As a result, the content of the curing agent in the coating can be decreased, and thus, a coating excellent in workability and impact resistance can be formed. Further, since formaldehyde is not used as a raw material, there is no fear of adversely affecting the flavor retention of the contents. Further, unlike the case of using a phenol resin, there is no fear that the coating is colored. Since a colorless transparent coating can be formed, a coating having an excellent coating color tone can be formed.

Examples of the $\beta$-hydroxyalkylamide compound to be used as a curing agent in the present invention include the component represented by the following General Formula [I].

General Formula [I]        $[\text{HO-CH}(R_1)\text{-CH}_2\text{-N}(R_2)\text{-CO-}]_m\text{-A-}[\text{-CO-N}(R_2\text{'})\text{-CH}_2\text{-CH}(R_1\text{'})\text{-OH}]_n$

In the formula, $R_1$ and $R_1$' each represents a hydrogen atom or an alkyl group having 1-5 carbon atoms; $R_2$ and $R_2$' each represents a hydrogen atom or an alkyl group having 1-5 carbon atoms, or a component represented by General Formula [II] below; "A" represents a polyvalent organic group; m represents 1 or 2; and n represents 0 to 2 (the sum of m and n is at least 2).

General formula [II]        HO-CH($R_3$)-CH$_2$-

In the formula, $R_3$ represents a hydrogen atom or an alkyl group having 1-5 carbon atoms.

The "A" in the General Formula [I] is preferably an aliphatic, alicyclic or aromatic hydrocarbon. More preferably, it is an aliphatic, alicyclic or aromatic hydrocarbon having 2-20 carbon atoms, and still more preferably, an aliphatic hydrocarbon having 4-10 carbon atoms.

The sum of m and n in the General Formula [I] is preferably 2, 3, or 4.

The functional group equivalent of the β-hydroxyalkylamide group (hydroxyl group) in the β-hydroxyalkylamide compound is preferably in the range of 30 to 500 g/eq, and particularly preferably in the range of 40 to 200 g/eq. In this specification, the functional group equivalent denotes a value obtained by dividing the molecular weight by the number of functional groups per molecule of the curing agent (here, the functional group refers to a functional group capable of crosslink-reacting with the carboxyl group of the polyester resin as the base resin). Namely, it means a molecular weight per functional group of the curing agent. When the functional group equivalent is smaller than the range, the distance between the crosslinking points cannot be set long, so that the flexibility of the coating may be lowered and the workability may be degraded. On the other hand, when the same equivalent exceeds the range, the curability may be insufficient.

It is further preferable that the average molecular weight of the curing agent is 1,000 or less. When the average molecular weight exceeds the range, compatibility with respect to the polyester resin as the base resin may deteriorate, whereby the reactivity may deteriorate. More preferably, the number of functional groups per molecule in the curing agent is 3 or more, so that favorable curability can be obtained.

Among the components that can be represented by the General Formula [I], particularly preferred examples of β-hydroxyalkylamide compound to be used as the curing agent include: N,N,N',N'-tetrakis(2-hydroxyethyl)adipoamide (CAS: 6334-25-4, molecular weight: about 320, the number of functional groups per molecule (the number of hydroxyl groups): 4, hydroxyl value (theoretical value): 700 mgKOH/g, product example: Primid XL552 manufactured by EMS-GRILTECH Co., Ltd.), and N,N,N',N'-tetrakis(2-hydroxypropyl)adipoamide (CAS: 57843-53-5, molecular weight: about 376, the number of functional groups per molecule (the number of hydroxyl groups): 4, hydroxyl value (theoretical value): 596 mgKOH/g, product example: Primid QM1260 manufactured by EMS-GRILTECH Co., Ltd.). Here, the hydroxyl value is a theoretical value calculated from the molecular weight based on the basic molecular structure and the number of functional groups per molecule (number of hydroxyl groups).

Among them, the N,N,N',N'-tetrakis(2-hydroxypropyl)adipoamide is preferred from the viewpoint of curability and retort resistance, since it has higher reactivity with the polyester resin and superior curability in comparison with the N,N,N',N'-tetrakis(2-hydroxyethyl)adipoamide. Furthermore, the N,N,N',N'-tetrakis(2-hydroxypropyl)adipoamide can form a denser crosslinked structure, whereby a coating with excellent retort whitening resistance can be formed.

As for the aqueous coating composition of the present invention, the equivalent ratio of the aforementioned polyester resin as the base resin (main component) to the functional groups of the curing agent is regarded as important for exhibiting excellent retort whitening resistance without impairing curability and workability. In the present invention, it is important that the equivalent ratio of the hydroxyl group derived from the β-hydroxyalkylamide group of the curing agent to the carboxyl group of the polyester resin (OH group / COOH group molar ratio) is in the range of 0.8 to 3.0, preferably 1.0 to 3.0, more preferably 1.0 to 2.8, and still more preferably more than 1.4 and not more than 2.1. The reason for this can be inferred as follows.

As for the coating composition of the present invention, the carboxyl group of the polyester resin as the base resin crosslink-reacts with the hydroxyl group in the β-hydroxyalkylamide group contained in the β-hydroxyalkylamide compound as the curing agent by the heat at the time of coating and baking, thereby forming a crosslinked (cured) coating. However, since both the carboxyl group and the hydroxyl group are hydrophilic functional groups, the water resistance of the coating may deteriorate when the number of unreacted functional groups not used for crosslinking increases. When the coating is sterilized by heating with water droplets attached thereon, or when the coating is subjected to retort sterilization, i.e., high-pressure heat sterilization under high temperature and high humidity conditions, the coating is likely to absorb water so as to be whitened. More specifically, when the ratio of the hydroxyl group amount of the curing agent to the amount of the carboxyl group of the polyester resin is greater than the aforementioned range, a large number of unreacted hydroxyl groups may remain in the coating, thereby degrading the water resistance of the coating. When the coating is subjected to a retort treatment or the like, the coating may be whitened due to the absorbed water, namely, sufficient retort whitening resistance cannot be imparted. Furthermore, when the number of functional groups in the curing agent becomes excessively large, it may make difficult for each molecule of the curing agent to react with two or more molecules of the polyester resin. This may cause problems in crosslink formation and reduce curability. Further, a large number of unreacted curing agent molecules remaining in the coating may adversely affect the workability of the coating.

When the amount of hydroxyl group of the curing agent relative to the amount of carboxyl group of the polyester resin is smaller than the range, it may be difficult to reliably impart sufficient curability by baking in a short time, because the number of reaction points is decreased. As a result, the water resistance and the barrier properties may deteriorate. Furthermore, the carboxyl group tends to remain unreacted, and as a result, retort whitening resistance cannot be obtained. This is because the carboxyl group significantly lowers the water resistance as compared with the hydroxyl group. Due to insufficient curing, coating embrittlement may easily occur depending on the glass transition temperature of the polyester resin, and workability may deteriorate. From such viewpoint, the functional group equivalent ratio of the polyester resin to the β-hydroxyalkylamide compound is set within the appropriate range in the present invention, so that the water resistance and further retort whitening resistance can be imparted reliably without impairing curability and workability.

As described above, it is important in the coating composition of the present invention that the equivalent ratio of the hydroxyl group of the curing agent formed of the β-hydroxyalkylamide compound to the carboxyl group of the polyester resin (OH group / COOH group molar ratio) is within the above-described range. Taking this into consideration, the blend amount of the curing agent to the polyester resin is appropriately adjusted. The equivalent ratio of the hydroxyl group of the β-hydroxyalkylamide compound as the curing agent to the carboxyl group of the polyester resin (OH group / COOH group molar ratio) can be calculated from the acid value of the polyester resin and the hydroxyl value of the curing agent, and the solid content blend ratio of the polyester resin to the curing agent.

The solid content blend amount of the β-hydroxyalkylamide compound as the curing agent is preferably in the range of 1 to 20 parts by mass, preferably 3 to 15 parts by mass, more preferably 3 to 10 parts by mass, and particularly preferably 3 to 9 parts by mass, relative to 100 parts by mass of the solid content of the polyester resin.

(Aqueous coating composition)

The aqueous coating composition of the present invention contains at least a specific polyester resin described above as the base resin (main component), a β-hydroxyalkylamide compound as the curing agent, and an aqueous medium. For the aqueous coating composition of the present invention, the component defined as the base resin (main component) is the component of the highest content (mass ratio) among the solid components (nonvolatile components excepting volatile substances such as water and a solvent) for forming the coating in the aqueous coating composition.

(Aqueous medium)

For the aqueous medium used for the aqueous coating composition of the present invention, water or a mixture of water and an organic solvent such as an alcohol or a polyhydric alcohol, or a derivative thereof can be used, similarly in a case of preparing a well-known aqueous coating composition. In a case of using the organic solvent, the solvent is contained preferably in an amount of 1 to 45% by mass, particularly preferably 5 to 30% by mass relative to the entire aqueous medium in the aqueous coating composition. The film formation performance can be improved by containing the solvent in this range.

The organic solvent preferably possesses amphiphilicity. The examples include: methyl alcohol, ethyl alcohol, isopropyl alcohol, n-butanol, ethylene glycol, methyl ethyl ketone, butyl cellosolve, carbitol, butyl carbitol, propylene glycol monopropyl ether, propylene glycol ethylene glycol monobutyl ether, propylene glycol monomethyl ether, propylene glycol monobutyl ether, dipropylene glycol monomethyl ether, dipropylene glycol monobutyl ether, tripropylene glycol monomethyl ether, and 3-methyl3-methoxybutanol.

(Basic compound)

The aqueous coating composition of the present invention preferably contains a basic compound capable of neutralizing the carboxyl group in the polyester resin so that water dispersibility or water solubility can be imparted to the polyester resin. The basic compound is preferably a compound that can volatilize by baking in formation of the coating, and the examples include ammonia and/or an organic amine compound having a boiling point of not higher than 250°C.

Specific examples that can be used here include: alkylamines such as trimethylamine, triethylamine, and n-butylamine; and alcoholic amines such as 2-dimethylaminoethanol, diethanolamine, triethanolamine, aminomethylpropanol, and dimethylaminomethylpropanol. Polyvalent amines such as ethylenediamine or diethylenetriamine can also be used. Amines having branched alkyl groups or heterocyclic amines are also suitably used. As the amine having a branched alkyl group, a branched chain alkylamine having 3-6 carbon atoms, particularly, a branched chain alkylamine having 3-4 carbon atoms can be used, and the examples include isopropylamine, sec-butylamine, tert-butylamine, and isoamylamine. As the heterocyclic amine, a saturated heterocyclic amine containing one nitrogen atom can be used, and the examples include pyrrolidine, piperidine, and morpholine.

Among the aforementioned examples, triethylamine or 2-dimethylaminoethanol can be suitably used in the present invention. The use amount is preferably in the range of 0.5 to 1.5 equivalents relative to the carboxyl group.

(Lubricant)

The aqueous coating composition of the present invention may contain a lubricant if necessary. It is preferable to add 0.1 to 10 parts by mass of the lubricant to 100 parts by mass of the polyester resin.

Addition of the lubricant serves to prevent scratches on the coating during the working for formation, and improve the slidability of the coating during the working for formation.

Examples of the lubricant that can be added to the aqueous coating composition of the present invention include: a fatty acid ester wax as an esterified product of a polyol compound and a fatty acid, a silicon-based wax, a fluorine-based wax such as polytetrafluoroethylene, a polyolefin wax such as polyethylene, a paraffin wax, lanolin, montan wax, microcrystalline wax, carnauba wax, a silicon-based compound, and petrolatum. Each of these lubricants can be used singly or as a mixture of at least two thereof.

(Others)

The aqueous coating composition of the present invention can contain further any components to be blended in a conventional coating composition in accordance with a conventional and well-known formulation, and the examples include a leveling agent, a pigment, and a defoaming agent.

The polyester resin can be contained with any other resin components in a range not to hinder the object of the present invention. The examples may include water-dispersible or water-soluble resins such as polyvinyl acetate, ethylene·vinyl acetate copolymer, polyolefin-based resin, epoxy resin, polyurethane resin, acrylic resin, phenol resin, melamine resin, polyvinyl chloride-based resin, polyvinyl chloride-vinyl acetate copolymer resin, polyvinyl alcohol, ethylene·vinyl alcohol copolymer, polyvinyl pyrrolidone, polyvinyl ethyl ether, polyacrylamide, acrylamide-based compound, polyethyleneimine, starch, gum arabic, and methylcellulose.

In the aqueous coating composition of the present invention, the polyester resin is suitably contained in an amount of 5 to 55% by mass as a solid content. When the resin solid content is smaller than the range, an appropriate coating amount cannot be provided reliably, so that the coatability may deteriorate. When the resin solid content is larger than the range, workability and coating applicability may deteriorate.

(Coated metal substrate)

The aqueous coating composition of the present invention is coated on a metal sheet or a metal substrate such as a metal container or a metal lid by a known coating method such as roll coater coating, spray coating, or dip coating, and baked by a heating means such as an oven to obtain a coated metal substrate such as a coated metal sheet, a coated metal container, or a coated metal lid.

The conditions for baking the aqueous coating composition of the present invention are appropriately adjusted according to the types of polyester resin, curing agent, metal substrate, or a coating amount and the like. In order to impart a sufficient curability, preferably the aqueous coating composition of the present invention is cured by heat under conditions of a baking temperature in the range of 150°C to 320°C, preferably 180 to 300°C, for 5 seconds or more, preferably in the range of 5 seconds to 30 minutes, and particularly preferably for 5 seconds to 180 seconds.

The thickness of the coating to be formed is suitably less than 30 $\mu$m, preferably in the range of 0.5 to 20 $\mu$m, more preferably not less than 2 $\mu$m and less than 15 $\mu$m, and particularly preferably in the range of 3 to 14 $\mu$m in terms of dry film thickness, though the present invention is not limited to the range.

[Coated metal sheet]

Examples of metal sheets to be used for the coated metal sheets include a hot-rolled steel sheet, a cold-rolled steel sheet, a hot dip galvanized steel sheet, an electrogalvanized steel sheet, an alloy-plated steel sheet, an aluminum-zinc alloy-plated steel sheet, an aluminum sheet, a tin-plated steel sheet, a stainless steel sheet, a copper sheet, a copper-plated steel sheet, a tin-free steel sheet, a nickel-plated steel sheet, an ultra-thin tin-plated steel sheet, and a chromium-treated steel sheet. The metal sheet to be used can be subjected to a surface treatment as required. Examples of the surface treatment include chemical conversion treatments using phosphate chromate, zirconium or the like and coating-type treatments using a combination of a water-soluble resin such as polyacrylic acid and a zirconium salt such as ammonium zirconium carbonate.

It is also possible to form an organic resin coated metal sheet by further laminating a thermoplastic resin film such as a polyester resin film as an organic resin coating layer on the coating of the aforementioned coated metal sheet.

[Coated metal container]

A coated metal container can be obtained by forming a coating formed of the aqueous coating composition of the present invention on an inner surface and/or an outer surface of a metal container. It is preferable that a coating formed of the coating composition of the present invention is formed on both the inner surface and the outer surface of the metal container since the aqueous coating composition of the present invention is excellent in flavor sorption resistance, retort whitening resistance, workability and corrosion resistance.

As the metal container to be provided with the coating, any conventionally-known metal containers can be used, and the examples include a three-piece can having a side seam and a seamless can (two-piece can), though the present invention is not limited to these examples.

In a case of a metal container like a seamless can formed by severe drawing-ironing or the like, a coated metal container is preferably obtained by applying the aqueous coating composition of the present invention on a previously formed metal container by a method such as spray coating. Alternatively, since the coating formed of the coating composition of the present invention is excellent in workability, the aforementioned coated metal sheet can be formed into a metal container. The coating composition of the present invention is excellent in retort whitening resistance and it can be used for forming a coating having a transparent color tone and a luster. Therefore, the coating composition can be suitably used as a finishing varnish for protecting a printed ink on the outer surface of the metal container.

[Coated metal lid]

Any conventionally-known lid-forming method can be employed to form a coated metal lid from the aforementioned metal sheet coated with the aqueous coating composition of the present invention. The thus obtained lid can be used, for instance, as a stay-on-tab type easy-open can lid or a full-open type easy-open can lid. Since the aqueous coating composition of the present invention can be formed into a coating having a transparent coating tone and excellent retort whitening resistance and workability, it is desirable that a coating formed of the coating composition of the present invention is formed on at least the outer surface of the metal lid.

Examples:

Hereinafter, the present invention will be specified below with reference to Examples. In the Examples, the term "part" indicates "part by mass".

The respective measurement items for the polyester resins A-L are described below. All of the polyester resins A-L are acrylic unmodified polyester resins.

(Measurement of number average molecular weight)

Solid polyester resins were measured using gel permeation chromatography (GPC) based on a calibration curve of standard polystyrene.

(Measurement of glass transition temperature)

Solid polyester resins were measured using a differential scanning calorimeter (DSC).

(Measurement of acid value)

1.0 g of polyester resin was dissolved in 10 ml of chloroform, which was titrated with a 0.1 N KOH-ethanol solution to determine its resin acid value (mgKOH/g). Here, phenolphthalein was used as the indicator. A solvent such as tetrahydrofuran was used for a polyester resin not dissoluble in the chloroform.

(Measurement of monomer composition)

30 mg of solid polyester resin was dissolved in 0.6 ml of deuterated chloroform, which was subjected to a 1H-NMR measurement, and the monomer composition ratio was determined from the peak intensity. The composition ratio was determined except for trace components (less than 1 mol% relative to all of the monomer components).

[Preparation of coated metal substrate (coated metal sheet)]

Each of the aqueous coating compositions in Examples, Comparative Examples and Reference Examples was prepared by coating a metal sheet by use of a bar coater so as to have a thickness of 9 μm after baking, and baked at 250°C for 60 seconds. The metal sheet used here was a phosphate chromate-based surface-treatment aluminum sheet (3104 alloy, thickness: 0.28 mm, weight of chromium in the surface-treatment film: 20 mg/m²).

(Flavor sorption test)

A test piece having a size of 2.5 × 5 cm (surface area of the coating: 12.5 cm²) was prepared from each of the coated metal sheets obtained in Examples 1-14, Comparative Examples 1-3 and Reference Examples 1-4. As a model flavor test solution, a 5% aqueous ethanol solution containing 2 ppm of limonene was prepared. The model flavor test solution was placed in a glass bottle with a packing (DURAN bottle), and the test piece was immersed in the solution. The bottle was sealed and stored at 30°C for two weeks. The test piece was then taken out from the glass bottle, and washed with water. After removing the water droplets, the test piece was immersed in 50 ml of diethyl ether, sealed, and stored at room temperature for 24 hours. The extract was concentrated in a concentrator and subjected to GC/MS (gas chromatography-mass spectrometry). From the component peaks derived from limonene obtained from the GC/MS, the sorption amount was determined by a calibration curve, and the ratio of the sorption amount to the limonene charge amount was determined as the limonene sorption rate (%) from the following Equation (2). The results are shown in Table 1 and Table 2.

$$\text{Limonene sorption rate (\%) = limonene sorption amount / limonene charge amount} \times 100 \quad \cdots(2)$$

The evaluation criteria are as follows.

◎: Limonene sorption rate is less than 5%
○: Limonene sorption rate is 5% or more and less than 15%
Δ: Limonene sorption rate is 15% or more and less than 25%
×: Limonene sorption rate is 25% or more

(Retort whitening resistance)

Each of the coated metal sheets obtained in Examples 4, 5 and 15-26, Comparative Examples 4-11, and Reference Examples 5 and 6 was placed in an upright state inside a stainless cup, and ion-exchanged water was poured into this cup to a height half the coated metal sheet. This was placed in an autoclave and subjected to a retort treatment at 125°C for 30 minutes. After the treatment, the coated metal sheet was taken out and air-dried, and then, the whitened state (whitening) of the portion of the coating, i.e., the portion immersed in water was visually evaluated. The results are shown in Tables 1, 3, and 4.
The evaluation criteria are as follows.

○ : Not whitened
Δ : Slightly whitened
× : Significantly whitened

(Curability)

The curability of the coated metal sheet was evaluated by MEK extraction rate. Specifically, a test piece of 5 cm × 5 cm was cut out from a coated metal sheet. After measuring the mass (W1), the test piece was immersed in 200 ml of boiling MEK (methyl ethyl ketone) for 1 hour under 80°C reflux so as to conduct a one-hour MEK extraction at the boiling point. After the extraction, the test piece was washed and dried, and then, its mass after extraction (W2) was measured. Further, the coating was delaminated by a decomposition method using concentrated sulfuric acid, washed and dried, and the mass (W3) of the test piece was measured. The MEK extraction rate (% by mass) of the coating of the coated metal sheet can be determined by the following Equation (3).

$$\text{MEK extraction rate (\%) = 100} \times \text{(W1-W2) / (W1-W3)} \ldots \quad (3)$$

Evaluation criteria of the coated metal sheets obtained in Examples 1-14, Comparative Examples 1-3, and Reference Examples 1-4 are as follows. The results are shown in Tables 1 and 2.

◎ : Less than 10%
○ : 10% or more and less than 20%
Δ : 20% or more and less than 30%
× : 30% or more

Evaluation criteria of the coated metal sheets obtained in Examples 15-26, Comparative Examples 4-11 and Reference Examples 5 and 6 are as follows. The results are shown in Tables 3 and 4.

○ : Less than 20%
Δ : 20% or more and less than 30%
× : 30% or more

(Workability)

A coated metal sheet was cut out to make a test piece of 3.5 × 3 cm such that the long side thereof would correspond to the direction for rolling the aluminum sheet. This test piece was bent parallel to the short sides such that the coated surface would make the outer surface. Two aluminum sheets having the same thickness as that of the coated metal sheet were sandwiched as spacers inside the bent test piece. Later, a bending process was carried out under an atmosphere of 25°C by dropping a weight of 3 kg from the height of 40 cm. The bent tip portion (2 cm width) was brought into contact with a sponge soaked in a 1% aqueous sodium chloride solution, energized at a voltage of 6.3 V for 4 seconds, and the current value (mA) after 4 seconds was measured.

Evaluation criteria of the coated metal sheets obtained in Examples 1-14, Comparative Examples 1-3 and Reference Examples 1-4 are as follows. The results are shown in Tables 1 and 2.

◎ : Less than 1 mA
O: 1 mA or more and less than 3 mA
Δ : 3 mA or more and less than 10 mA
× : 10 mA or more

Evaluation criteria of the coated metal sheets obtained in Examples 15-26, Comparative Examples 4-11 and Reference Examples 5 and 6 are as follows. The results are shown in Tables 3 and 4.

O: Less than 1 mA
Δ : 1 mA or more and less than 3 mA
× : 3 mA or more

(Preparation of aqueous coating composition)

(Example 1)

The polyester resin as the base resin was polyester resin-A (acid value: 23 mgKOH/g, Tg: 80°C, Mn = 8,000, monomer composition: terephthalic acid component / ethylene glycol component / propylene glycol component = 50/10/40 mol%). The β-hydroxyalkylamide compound used as the curing agent was N,N,N',N'-tetrakis(2-hydroxypropyl)adipoamide (CAS: 57843-53-5, hydroxyl value (theoretical value): 596 mgKOH/g, and expressed as "β-hydroxyalkylamide" in the Table). 333 parts (solid content: 100 parts) of an aqueous dispersion liquid of the polyester resin-A (resin solid content concentration: 30% by mass, isopropyl alcohol concentration: 18% by mass) and 16.7 parts (solid content: 5 parts) of the aqueous solution of the β-hydroxyalkylamide compound (solid content concentration: 30% by mass) that had been adjusted using ion-exchanged water were introduced into a glass container and stirred for 10 minutes to obtain an aqueous coating composition having a solid content concentration of 30% by mass and a solid content blend ratio of polyester resin / curing agent of 100/5 (mass ratio) .

(Examples 2-5)

Aqueous coating compositions were prepared as shown in Table 1 in the same manner as in Example 1 except that the polyester resin was replaced by polyester resin-B (Tg: 67°C, Mn = 9,000, acid value: 18 mgKOH/g, monomer composition: terephthalic acid component / isophthalic acid component / ethylene glycol component / neopentyl glycol component = 36/14/24/26 mol%), polyester resin-C (Tg: 40°C, Mn = 9,000, acid value: 17 mgKOH/g, monomer composition: terephthalic acid component / isophthalic acid component / adipic acid component / ethylene glycol component / neopentyl glycol component = 28/15/7/25/25 mol%), polyester resin-E (acid value: 50 mgKOH/g, Tg: 46°C, Mn = 3,000) or polyester resin-F (acid value: 58 mgKOH/g, Tg: 70°C, Mn: 3, 000) .

(Example 6)

An aqueous coating composition was prepared in the same manner as in Example 1 except that the polyester resin used here was a mixture ($Tg_{mix}$: 65.7°C, $AV_{mix}$: 21.8 mgKOH/g) of polyester resin-A and polyester resin-G (Tg: -25°C, Mn = 17,000, acid value: 11 mgKOH/g, monomer composition: terephthalic acid component / isophthalic acid component / sebacic acid component / 1,4-butanediol component = 14/17/19/50 mol%) mixed at a mass ratio of 90:10.

(Examples 7-14, Comparative Example 1)

Aqueous coating compositions were prepared in the same manner as in Example 6 except that the polyester resins or the solid content blend ratios were changed as shown in Table 1. The polyester resins other than the aforementioned ones were: polyester resin-H (Tg: 8°C, Mn = 19,000, acid value: 8 mgKOH/g, monomer composition: terephthalic acid component / isophthalic acid component / sebacic acid component /ethylene glycol component / neopentyl glycol component = 30/5/15/22/28 mol%); polyester resin-I (Tg: 20°C, Mn = 17,000, acid value: 8 mgKOH/g, monomer composition: terephthalic acid component / isophthalic acid component / sebacic acid component / ethylene glycol component / neopentyl glycol component = 31/7/12/30/20 mol%); polyester resin-J (acid value: 5 mgKOH/g, Tg: 52°C, Mn = 17,000, monomer composition: terephthalic acid component / isophthalic acid component / adipic acid component / ethylene glycol component / neopentyl glycol component = 23/23/4/24/26 mol%), and polyester resin-D (acid value: 36 mg KOH/g, Tg: 80°C, Mn = 5,000).

(Comparative Examples 2 and 3)

Aqueous coating compositions were prepared in the same manner as in Example 1 except that the polyester resins used here or the solid content blend ratios were changed as shown in Table 1. The polyester resins were polyester resin-K (acid value: 8 mgKOH/g, Tg: 65°C, Mn = 13,000, monomer composition: terephthalic acid component / isophthalic acid component / ethylene glycol component / neopentyl glycol component = 26/24/21/29 mol%) and polyester resin-L (acid value: 74 mgKOH/g, Tg: 80°C, Mn = 3, 000) .

(Reference Examples 1 and 2)

Aqueous coating compositions were prepared in the same manner as in Example 1 except that the polyester resin used here was polyester resin-M, which was an acrylic modified polyester resin modified with an acrylic resin (Tg: 60°C, acid value: 15 mgKOH/g, content of acrylic component: 70% by mass), or polyester resin-N (Tg: 50°C, acid value: 30 mgKOH/g, content of acrylic component: 40% by mass).

(Reference Example 3)

An aqueous coating composition was prepared in the same manner as in Example 1 except that the polyester resin used here was a mixture ($Tg_{mix}$: 37.4°C) of polyester resin-A and polyester resin-O (acid value: less than 3 mgKOH/g, Tg: 4°C, Mn = 8,000) mixed at a mass ratio of 50:50.

(Reference Example 4)

An aqueous coating composition (solid content concentration: 30% by mass, solid content blend ratio: polyester resin / curing agent / curing catalyst = 100/10/1) was prepared by using a mixture of polyester resin-A and polyester resin-G mixed at a mass ratio of 80:20 ($AV_{mix}$: 20.6 mgKOH/g), a curing agent of a meta cresol-based resol-type phenol resin obtained by butyl etherification of a methylol group (rate of etherified methylol group: 90 mol%, Mn = 1,600), and a curing catalyst of dodecylbenzenesulfonic acid (amine neutralized product). For the dodecylbenzenesulfonic acid, "dodecylbenzenesulfonic acid (soft type) (mixture)" manufactured by Tokyo Chemical Industry Co., Ltd. was used.

(Examples 15-26, Comparative Examples 4-11)

An aqueous coating composition was prepared in the same manner as in Example 1, except that the type of polyester resin or the solid content blend ratio was changed as shown in Tables 3 and 4. The polyester resin other than the polyester resins A-O was polyester resin-P (acrylic unmodified polyester resin, acid value: 31 mgKOH/g, Tg: 38°C, Mn = 6,000).

(Reference Example 5)

An aqueous coating composition was prepared in the same manner as in Example 1, except that the polyester resin used here was polyester resin-N, which is an acrylic-modified polyester resin modified with an acrylic resin (Tg: 50°C, acid value: 30 mgKOH/g, content of acrylic component: 40% by mass).

(Reference Example 6)

An aqueous coating composition was prepared in the same manner as in Example 1, except that the polyester resin used here was a mixture ($Tg_{mix}$: 39°C) of polyester resin-P and polyester resin-Q (acid value: less than 3 mgKOH/g, Tg: 40°C, Mn: 20,000) mixed at a mass ratio of 50:50.

Tables 1 and 2 indicate items for the aqueous coating compositions (type of polyester resin, type of curing agent, solid content blend ratio, molar ratio of polyvalent carboxylic acid component constituting polyester resin, and functional group equivalent ratio) and evaluation results for flavor sorption resistance, curability and workability, and retort whitening resistance (this is involved only in Examples 4 and 5). Here, Table 1 refers to Examples 1-14, and Table 2 refers to Comparative Examples 1-3 and Reference Examples 1-4.

Tables 3 and 4 indicate items for the aqueous coating compositions (type of polyester resin, type of curing agent, solid content blend ratio, and functional group equivalent ratio) and evaluation results for retort whitening resistance, curability and workability. Here, Table 3 refers to Examples 15-26, and Table 4 refers to Comparative Examples 4-11 and Reference Examples 5 and 6.

[Table 1-1]

| | | | Tg (°C) | Acid value (mgKOH/g) | Mn | Examples | | | | | | |
|---|---|---|---|---|---|---|---|---|---|---|---|---|
| | | | | | | 1 | 2 | 3 | 4 | 5 | 6 | 7 |
| Aqueous coating composition blend ratio | Polyester resin | A | 80 | 23 | 8,000 | 100 | | | | | 90 | 80 |
| | | B | 67 | 18 | 9,000 | | 100 | | | | | |
| | | C | 40 | 17 | 9,000 | | | 100 | | | | |
| | | D | 80 | 36 | 5,000 | | | | | | | |
| | | E | 46 | 50 | 3,000 | | | | 100 | | | |
| | | F | 70 | 58 | 3,000 | | | | | 100 | | |
| | | G | -25 | 11 | 17,000 | | | | | | 10 | 20 |
| | | H | 8 | 8 | 19,000 | | | | | | | |
| | | I | 20 | 8 | 17,000 | | | | | | | |
| | | J | 52 | 5 | 17,000 | | | | | | | |
| | Curing agent | β-hydroxyalkylamide | | | | 5 | 5 | 5 | 13 | 15 | 5 | 5 |
| Polyester resin properties | $Tg_{mix}$ (°C) | | | | | - | - | - | - | - | 65.7 | 52.4 |
| | $AV_{mix}$ (mgKOH/g) | | | | | - | - | - | - | - | 21.8 | 20.6 |
| | Aromatic dicarboxylic acid : aliphatic dicarboxylic acid (molar ratio) | | | | | 100:0 | 100:0 | 86:14 | 92:8 | 100:0 | 96.6: 3.4 | 93.1: 6.9 |
| | Rate of aliphatic dicarboxylic acid having more than 6 carbon atoms (mol%) | | | | | 0 | 0 | 0 | 8 | 0 | 3.4 | 6.9 |
| | Functional group equivalent ratio (OH group / COOH group molar ratio) | | | | | 1.30 | 1.66 | 1.75 | 1.55 | 1.49 | 1.37 | 1.45 |
| Evaluation | Flavor sorption | | | | | ◎ | ◎ | ○ | ○ | ◎ | ◎ | ○ |
| | Curability | | | | | ◎ | ○ | ○ | ◎ | ○ | ◎ | ○ |
| | Workability | | | | | ◎ | ◎ | ◎ | ○ | ○ | ◎ | ◎ |
| | Retort whitening resistance | | | | | - | - | - | ○ | Δ | - | - |

[Table 1-2]

| Aqueous coating composition blend ratio | Polyester resin | | Tg (°C) | Acid value (mgKOH/g) | Mn | Examples | | | | | | |
|---|---|---|---|---|---|---|---|---|---|---|---|---|
| | | | | | | 8 | 9 | 10 | 11 | 12 | 13 | 14 |
| | Polyester resin | A | 80 | 23 | 8,000 | 70 | 70 | 80 | 60 | 40 | 50 | |
| | | B | 67 | 18 | 9,000 | | | | | | | |
| | | C | 40 | 17 | 9,000 | | | | | | | |
| | | D | 80 | 36 | 5,000 | | | | | | | 80 |
| | | E | 46 | 50 | 3,000 | | | | | | | |
| | | F | 70 | 58 | 3,000 | | | | | | | |
| | | G | -25 | 11 | 17,000 | 30 | | | | | | 20 |
| | | H | 8 | 8 | 19,000 | | 30 | | | | | |
| | | I | 20 | 8 | 17,000 | | | 20 | 40 | 60 | | |
| | | J | 52 | 5 | 17,000 | | | | | | 50 | |
| | Curing agent | β-hydroxyalkylamide | | | | 5 | 5 | 5 | 5 | 5 | 5 | 5 |
| Polyester resin properties | Tg$_{mix}$ (°C) | | | | | 40.2 | 54.8 | 65.6 | 52.3 | 40 | 65.4 | 52.4 |
| | AV$_{mix}$ (mgKOH/g) | | | | | 19.4 | 18.5 | 20 | 17 | 14 | 14 | 31 |
| | Aromatic dicarboxylic acid : aliphatic dicarboxylic acid (molar ratio) | | | | | 89.5: 10.5 | 91.5: 8.5 | 95.3: 4.7 | 90.6: 9.4 | 85.8: 14.2 | 96.4: 3.6 | 92.4: 7.6 |
| | Rate of aliphatic dicarboxylic acid having more than 6 carbon atoms (mol%) | | | | | 10.5 | 8.5 | 4.7 | 9.4 | 14.2 | 0 | 7.6 |
| | Functional group equivalent ratio (OH group /COOH group molar ratio) | | | | | 1.54 | 1.61 | 1.49 | 1.75 | 2.13 | 2.13 | 0.96 |
| Evaluation | Flavor sorption | | | | | Δ | ○ | ◎ | ○ | Δ | ◎ | ○ |
| | Curability | | | | | ○ | ○ | ◎ | ○ | ○ | Δ | ◎ |
| | Workability | | | | | ◎ | ◎ | ◎ | ◎ | ◎ | ◎ | ◎ |
| | Retort whitening resistance | | | | | - | - | - | - | - | - | - |

16

[Table 2]

| | | | Tg (°C) | Acid value (mgKOH/g) | M1) n | Comparative Examples | | | Reference Examples | | | |
|---|---|---|---|---|---|---|---|---|---|---|---|---|
| | | | | | | 1 | 2 | 3 | 1 | 2 | 3 | 4 |
| Aqueous coating composition blend ratio | Polyester resin | A | 80 | 23 | 8,000 | 60 | | | | | 50 | 80 |
| | | G | -25 | 11 | 17,000 | 40 | | | | | | 20 |
| | | K | 65 | 8 | 13,000 | | 100 | | | | | |
| | | L | 80 | 74 | 3,000 | | | 100 | | | | |
| | | M | 60 | 15 | - | | | | 100 | | | |
| | | N | 50 | 30 | - | | | | | 100 | | |
| | | O | 4 | <3 | 20,000 | | | | | | 50 | |
| | Curing agent | β-hydroxyalkylamide | | | | 5 | 5 | 5 | 5 | 5 | 5 | |
| | | resol-type phenolresin | | | | | | | | | | 10 |
| Polyester resin properties | $Tg_{mix}$ (°C) | | | | | 28.9 | - | - | - | - | 37.4 | 52.4 |
| | $AV_{mix}$ (mgKOH/g) | | | | | 18.2 | - | - | - | - | - | 20.6 |
| | Aromatic dicarboxylic acid : aliphatic dicarboxylic acid (molar ratio) | | | | | 85.9:14.1 | 100:0 | 100:0 | - | - | - | 93.1:6.9 |
| | Rate of aliphatic dicarboxylic acid having more than 6 carbon atoms (mol%) | | | | | 14.1 | 0 | 0 | - | - | - | 6.9 |
| | Functional group equivalent ratio (OH group / COOH group molar ratio) | | | | | 1.64 | 3.73 | 0.40 | 1.99 | 0.99 | - | - |
| Evaluation | Flavor sorption | | | | | × | ◎ | ◎ | ◎ | ○ | Unevaluated | Unevaluated |
| | Curability | | | | | Δ | × | ○ | Δ | ○ | × | ○ |
| | Workability | | | | | ◎ | ◎ | × | × | × | Unevaluated | × |

17

EP 3 882 027 A1

[Table 3]

| | | | Tg (°C) | Acid value (mgKOH/g) | Mn | Examples | | | | | | | | | | | |
|---|---|---|---|---|---|---|---|---|---|---|---|---|---|---|---|---|---|
| | | | | | | 15 | 16 | 17 | 18 | 19 | 20 | 21 | 22 | 23 | 24 | 25 | 26 |
| Aqueous coating composition blend ratio | Polyester resin | C | 40 | 17 | 9,000 | 100 | 100 | 100 | 100 | 100 | 100 | | | | | | |
| | | B | 67 | 18 | 9,000 | | | | | | | 100 | | | | | |
| | | A | 80 | 23 | 8,000 | | | | | | | | 100 | 100 | | | |
| | | P | 38 | 31 | 6,000 | | | | | | | | | | 100 | 100 | |
| | | D | 80 | 36 | 5,000 | | | | | | | | | | | | 100 |
| | Curing agent | β-hydroxyalkylamide | | | | 3 | 4.1 | 4.6 | 6 | 6.5 | 8 | 5 | 6 | 8 | 8 | 12 | 9 |
| | Functional group equivalent ratio (OH group / COOH group molar ratio) | | | | | 1.05 | 1.44 | 1.61 | 2.10 | 2.28 | 2.80 | 1.66 | 1.55 | 2.07 | 1.54 | 2.31 | 1.49 |
| Evaluation | Retort whitening resistance | | | | | ○ | ○ | ○ | ○ | Δ | Δ | ○ | ○ | ○ | ○ | Δ | ○ |
| | Curability | | | | | Δ | ○ | ○ | ○ | ○ | Δ | ○ | ○ | ○ | ○ | ○ | ○ |
| | Workability | | | | | ○ | ○ | ○ | ○ | ○ | ○ | ○ | ○ | ○ | ○ | ○ | ○ |

EP 3 882 027 A1

18

[Table 4]

| | | | Tg (°C) | Acid value (mgKOH/g) | Mn | Comparative Examples | | | | | | | | Reference Examples | |
|---|---|---|---|---|---|---|---|---|---|---|---|---|---|---|---|
| | | | | | | 4 | 5 | 6 | 7 | 8 | 9 | 10 | 11 | 5 | 6 |
| Aqueous coating composition blend ratio | Polyester resin | C | 40 | 17 | 9,000 | 100 | 100 | 100 | | | | | | | |
| | | A | 80 | 23 | 8,000 | | | | 100 | | | | | | |
| | | P | 38 | 31 | 6,000 | | | | | 100 | | | | | 50 |
| | | E | 46 | 50 | 3,000 | | | | | | 100 | | | | |
| | | J | 52 | 5 | 17,000 | | | | | | | 100 | | | |
| | | L | 80 | 74 | 3,000 | | | | | | | | 100 | | |
| | | Q | 40 | <3 | 20,000 | | | | | | | | | | 50 |
| | | N | 50 | 30 | - | | | | | | | | | 100 | |
| | Curing agent | β-hydroxyalkylamide | | | | 1 | 2 | 10 | 12 | 3 | 4 | 1.3 | 15 | 8 | 5 |
| | Functional group equivalent ratio (OH group / COOH group molar ratio) | | | | | 0.35 | 0.70 | 3.51 | 3.11 | 0.58 | 0.48 | 1.55 | 1.19 | 1.59 | - |
| Evaluation | Retort whitening resistance | | | | | × | × | × | × | × | × | × | Δ | Δ | × |
| | Curability | | | | | × | × | × | ○ | × | × | × | ○ | ○ | Unevaluated |
| | Workability | | | | | × | × | Δ | ○ | × | × | ○ | × | × | Unevaluated |

Industrial Applicability:

The aqueous coating composition of the present invention is capable of forming a coating excellent in coating properties such as curability and workability, which is also particularly excellent in flavor sorption resistance and retort whitening resistance, so that the composition can be suitably used to produce a metal can to be filled with a beverage or the like containing an aroma component or a content that requires retort sterilization, or a metal lid, for instance.

**Claims**

1.   An aqueous coating composition containing a polyester resin as a base resin having an acid value of not less than 10 mgKOH/g and less than 70 mgKOH/g and a glass transition temperature of not lower than 35°C, and a β-hydroxyalkylamide compound as a curing agent, wherein the β-hydroxyalkylamide compound contains a hydroxyl group at an equivalent ratio (OH group / COOH group molar ratio) in a range of 0.8 to 3.0 to a carboxyl group of the polyester resin.

2.   The aqueous coating composition according to claim 1, wherein the polyester resin is either an acrylic unmodified polyester resin or an acrylic modified polyester resin having a content (modified amount) of an acrylic resin component of less than 10% by mass.

3.   The aqueous coating composition according to claim 1 or 2, wherein the β-hydroxyalkylamide compound has a solid content blend amount in a range of 1 to 20 parts by mass relative to 100 parts by mass of a solid content of the polyester resin.

4.   The aqueous coating composition according to any one of claims 1 to 3, wherein 100 to 80 mol% of polyvalent carboxylic acid component constituting the polyester resin is an aromatic dicarboxylic acid, and 0 to 20 mol% is an aliphatic dicarboxylic acid.

5.   The aqueous coating composition according to claim 4, wherein the molar rate of the aliphatic dicarboxylic acid having more than 6 carbon atoms is less than 10 mol% in the polyvalent carboxylic acid component constituting the polyester resin.

6.   A coated metal substrate having a coating formed of the aqueous coating composition according to any one of claims 1 to 5.

7.   The coated metal substrate according to claim 6, wherein the coating has a thickness of not less than 2 μm and less than 15 μm.

## INTERNATIONAL SEARCH REPORT

| International application No. |
| --- |
| PCT/JP2019/044007 |

**A. CLASSIFICATION OF SUBJECT MATTER**
B32B 27/36(2006.01)i; C09D 5/02(2006.01)i; C09D 167/00(2006.01)i; B32B
15/09(2006.01)i
FI: C09D167/00; C09D5/02; B32B27/36; B32B15/09 A
According to International Patent Classification (IPC) or to both national classification and IPC

**B. FIELDS SEARCHED**

Minimum documentation searched (classification system followed by classification symbols)
B32B27/36; C09D5/02; C09D167/00; B32B15/09

| Documentation searched other than minimum documentation to the extent that such documents are included in the fields searched | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2003-26992 A (KANSAI PAINT CO., LTD.)<br>29.01.2003 (2003-01-29) claims 1, 4-7, example 11,<br>paragraphs [0017], [0042], [0045]-[0048], [0052],<br>[0054]-[0055], [0062]-[0073] | 1, 3-7<br>2 |
| A | JP 2003-321646 A (TOYO SEIKAN CO., LTD.)<br>14.11.2003 (2003-11-14) entire text | 1-7 |
| A | US 4390658 A (IMPERIAL CHEMICAL INDUSTRIES<br>LIMITED) 28.06.1983 (1983-06-28) entire text | 1-7 |
| A | JP 9-505108 A (PPG INDUSTRIES, INC.) 20.05.1997<br>(1997-05-20) entire text | 1-7 |
| P, X | JP 2019-157102 A (TOYO SEIKAN GROUP HOLDINGS,<br>LTD.) 19.09.2019 (2019-09-19) claims, example 5,<br>paragraph [0039] | 1-7 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 January 2020 (20.01.2020) | 28 January 2020 (28.01.2020) |

| Name and mailing address of the ISA/<br>   Japan Patent Office<br>   3-4-3, Kasumigaseki, Chiyoda-ku,<br>   Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
|---|
| PCT/JP2019/044007 |

C (Continuation). DOCUMENTS CONSIDERED TO BE RELEVANT

| Category* | Citation of document, with indication, where appropriate, of the relevant passages | Relevant to claim No. |
|---|---|---|
| P, X | WO 2019/159453 A1 (TOYO SEIKAN GROUP HOLDINGS, LTD.) 22.08.2019 claims, examples | 1-7 |
| P, A | JP 2019-183107 A (TOYO INK SC HOLDINGS CO., LTD.) 24.10.2019 (2019-10-24) entire text | 1-7 |

Form PCT/ISA/210 (continuation of second sheet) (January 2015)

**INTERNATIONAL SEARCH REPORT**
Information on patent family members

International application No.

PCT/JP2019/044007

| Patent Documents referred in the Report | Publication Date | Patent Family | Publication Date |
|---|---|---|---|
| JP 2003-26992 A | 29 Jan. 2003 | (Family: none) | |
| JP 2003-321646 A | 14 Nov. 2003 | (Family: none) | |
| US 4390658 A | 28 Jun. 1983 | JP 56-67355 A entire text GB 2060657 A entire text EP 28469 A1 entire text | |
| JP 9-505108 A | 20 May 1997 | US 5401790 A entire text WO 1995/027013 A1 entire text | |
| JP 2019-157102 A | 19 Sep. 2019 | WO 2018/207891 A1 claims, example 5, paragraph [0048] TW 201900788 A claims, example 5, paragraph [0048] | |
| WO 2019/159453 A1 | 22 Aug. 2019 | (Family: none) | |
| JP 2019-183107 A | 24 Oct. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4228585 B
- JP 2003026992 A